# EUROPÄISCHE PATENTSCHRIFT

(11) **EP 0 379 678 B1**
(45) Veröffentlichungstag und Bekanntmachung des Hinweises auf die Patenterteilung: **20.07.1994**
(21) Anmeldenummer: 89122099.8
(22) Anmeldetag: 30.11.1989
(51) Int. Cl.: F16F 1/36

(54) **Gummifederelement**
Rubber spring unit
Ressort en caoutchouc

(30) Priorität: 23.01.1989 DE 3901897
(43) Veröffentlichungstag der Anmeldung: 01.08.1990
(73) Patentinhaber: WOCO Franz-Josef Wolf & Co., D-63628 Bad Soden-Salmünster (DE)
(72) Erfinder: Wolf, Franz Josef, D-6483 Bad Soden-Salmünster (DE); Pletsch, Hubert, D-6483 Bad Soden-Salmünster (DE)
(74) Vertreter: Jaeger, Klaus, Dr.

(56) Entgegenhaltungen:
- EP-A- 0 187 888
- EP-A- 0 327 864
- DE-U- 6 913 179
- PATENT ABSTRACTS OF JAPAN vol. 1, no. 96 (M-77)(2642) 30 August 1977,& JP-A-52 37675 (SHIGEYA KAWAMATA) 23 März 1977,

## Beschreibung

Die Erfindung betrifft ein Gummifederelement der im Oberbegriff des Anspruchs 1 genannten Art sowie ein Verfahren zur Herstellung eines solchen Federelementes.

Aus der europäischen Patentschrift EP-A- 187 888 ist ein Gummifederelement dieser Art bekannt, das aus einem mit Hohlkanälen und Hohlräumen durchsetzten Gummiblock besteht. Die im Gummiblock ausgebildeten, insbesondere kugelförmigen und gleichmäßig verteilten Hohlräume sind von den Hohlkanälen derart durchsetzt, daß jeder der Hohlräume von jeweils nur einem der Hohlkanäle durchsetzt ist. Dabei überkreuzen sich die Hohlkanäle im Raum auf verschiedenen Höhen, ohne jedoch einander zu schneiden. Die Hohlkanäle bilden auf diese Weise untereinander jeweils in einer Ebene liegende Hohlkanalscharen, die flächenparallel zueinander angeordnet sind. Die Hohlräume sind in der Gummimatrix so verteilt, daß sie ein kubisch raumzentriertes Gitter bilden.

Bei einem Gummifederelement, das aus einem solchen Hohlgummiblock als Gummipuffer oder Auflager hergestellt ist, sind ein Auflageranschlußstück und ein Widerlageranschlußstück, in der Regel eine Stahlplatte mit Gewindezapfen oder einem Innengewindestück, einander flächig gegenüberliegend auf parallel zueinander gegenüberliegenden Oberflächen des Gummiblocks so angeordnet, daß sie parallel zu den Hohlkanalscharen ausgerichtet sind.

Ein solches Gummifederelement weist selbst bei Fertigung aus einem relativ harten Gummi durch die Hohlkanäle und Hohlräume eine vergleichsweise weiche Federkennlinie auf und vermag überdies durch die Anordnung der Hohlräume Auflager und Widerlager in überraschend wirksamer Weise akustisch voneinander abzukoppeln.

Wenn bei einem solchen Gummifederelement ein möglichst weiter weicher linearer Arbeitsbereich gewährleistet sein soll, andererseits aber in jedem Fall unter Auflast ein Einknicken der inneren Wandflächen, das heißt das Auftreten des sog. Knickeffekts, vermieden werden soll, sind der Verteilungsdichte und den Abmessungen der Hohlräume und Hohlkanäle im Gummiblock Grenzen gesetzt.

Die überraschenden akustischen und mechanischen Eigenschaften des bekannten Gummifederelements haben zu seiner raschen Akzeptanz in der Praxis, insbesondere im Kraftfahrzeugbau, gefunden, gestattet er doch das zuverlässige weiche Abfedern relativ großer Massen. Dabei konnte mit zunehmender Verbesserung der Federwegsbegrenzungen bei den entwickelten Lagern der Wunsch nach noch weicheren Kennlinien nicht ausbleiben.

Ausgehend von diesem Stand der Technik und dem von den Anwendungskonstrukteuren vorgetragenen Wunsch nach noch weicheren Kennlinien für Gummifederelemente dieser Art liegt der Erfindung die Aufgabe zugrunde, ein Federelement der eingangs beschriebenen Art ohne Zurücknahme der Materialfestigkeit des Matrixgummis und ohne Inkaufnahme eines Knickeffekts oder Aufgabe anderer erwünschter Eigenschaften so zu verbessern, daß die in Rede stehenden Gummifederelemente mit noch weicheren Federkennlinien erhalten werden können.

Zur Lösung dieser Aufgabe schafft die Erfindung ein Gummifederelement der eingangs genannten Art, das erfindungsgemäß die im kennzeichnenden Teil des Anspruchs 1 genannten Merkmale aufweist.

Ausgestaltungen dieses Gummifederelementes sind Gegenstand der Unteransprüche 2 bis 9.

Ein Verfahren zur Herstellung des Gummifederelementes ist Gegenstand des Anspruchs 10.

Die aufgrund der bisher vorliegenden Erfahrungen mit dem eingangs beschriebenen Gummifederelement durchaus verblüffende Lösung für die der vorliegenden Erfindung zugrundeliegende Aufgabe liegt also darin, die Hohlkanäle relativ zu den Hohlräumen, die diese durchsetzen, mit einem möglichst großen lichten Kanalquerschnitt im Vergleich zu den Hohlräumen auszubilden, und zwar, genauer gesagt, so, daß der Flächeninhalt des lichten Querschnitts der Hohlkanäle senkrecht zu deren Längsachse zumindest im wesentlichen mindestens 25 % des Flächeninhalts des größten lichten Querschnitts des nächstliegenden, von diesem Hohlkanal durchsetzten Hohlraums, beträgt, und daß sich die Hohlkanäle, die diese Bemessungsgrenzen einhalten, dann in der Gummimatrix unmittelbar schneiden. Das Überraschende an diesem Ergebnis ist dabei, daß solche Gummifederelemente bei Aufnahme abzufedernder Lasten mit einem Auflastvektor, der senkrecht zu den Kanalscharflächen steht, keine Knickeffekte in den Federkennlinien zeigen. Die akustische Entkopplung von Auflager und Widerlager bleibt dabei solange praktisch unverändert erhalten, wie der Flächeninhalt des lichten Querschnitts der Hohlkanäle, 85 % des Flächeninhalts des größten lichten Querschnitts des nächstliegenden, von diesem Hohlkanal durchsetzten Hohlraums, nicht überschreitet. Bei Hohlkanalquerschnitten, die größer als ungefähr 80 % der Querschnittsfläche des größten lichten Querschnitts des nächstliegenden, von dem jeweiligen Hohlkanal durchsetzten Hohlraums sind, nimmt die zusätzliche akustische Entkopplung zwischen Auflager und Widerlager ab, um dann bei gleichen Querschnitten der Hohlkanäle und der Hohlräume, das heißt dann, wenn effektiv keine Hohlräume mehr in der Gummimatrix vorliegen und diese nur noch von den Hohlkanalscharen selbst durchsetzt ist, nicht mehr als nutzbarer Effekt nachweisbar zu sein.

Mit anderen Worten, der Flächeninhalt des lichten Querschnitts der Hohlkanäle liegt also vorzugsweise im Bereich von mindestens 25 % und nicht über zumindest im wesentlichen 80 % des Flächeninhalts des größten lichten Querschnitts des nächstliegenden, von diesem Hohlkanal durchsetzten Hohlraumes. Derart relativ zu den Hohlraumquerschnitten dimensionierte Hohlkanäle können sich also, und das ist der eigentliche Kern der vorliegenden Erfindung, durchaus in der Gummimatrix auch schneiden und dadurch eine weitere Erweichung der Federkennlinie auch einer aus relativ hartem Material gefertigten Gummimatrix herbeiführen, ohne daß dadurch Knickeffekte auftreten.

Bei dieser Anordnung der Hohlkanäle in der Gummimatrix können sich die Hohlkanäle prinzipiell sowohl in den Hohlräumen selbst schneiden, das heißt, sie können sowohl gemeinsam in ein und denselben Hohlraum einmünden, als, sich auch unmittelbar, das heißt außerhalb der Hohlräume, schneiden. Dabei sollten in diesen unmittelbaren Kanalschnittpunkten vorzugsweise nicht mehr als zwei, sicherlich jedoch nicht mehr als drei Hohlkanäle einander schneidend zusammentreffen. Dabei sind diese Schnittpunkte vorzugsweise in der Gummimatrix so verteilt, daß sie einerseits untereinander im Raum auf Lücke stehen, andererseits aber auch zu den Hohlräumen selbst auf Lücke stehen, gegenüber diesen also ein um eine halbe Gitterkantenlänge verschobenes Untergitter bilden.

Im Gegensatz zu den Raumnetzgittern mit untereinander parallelen Hohlkanalscharen, das heißt im Gegensatz zu kubischen, hexagonalen oder auch tetragonalen Strukturen der Verteilung der Hohlräume in der Gummimatrix, bei denen sich die Kanäle vorzugsweise unmittelbar, das heißt außerhalb der Hohlräume, und vorzugsweise nur zu zweit, schneiden, werden bei einer radialen Anordnung und Verteilung die Hohlräume und Hohlkanäle, beispielsweise in einem zylindrischen Gummiblock, so ausgelegt und angeordnet, daß sie bei Bildung einer zumindest im wesentlichen in den Radialflächen liegenden Kanalscharenschichtung in einen vergleichsweise weiten zentralen Hohlkanal einmünden, der den gesamten Gummiblock, vorzugsweise beidseitig offen, durchsetzt.

Strukturen ähnlicher Art sind von einem mit Dämpferflüssigkeit gefüllten flächigen Gummidämpfer aus der japanischen Offenlegungsschrift JP-A- 52-37675 bekannt. Die Hohlräume sind als stehende regelmäßige Zylinder ausgebildet, die untereinander durch dünne Drosselkanäle, die sich in der Flächenstruktur eines regelmäßigen hexagonalen Gitters auch schneiden, und zwar in den Hohlräumen, verbunden sind. Diese Dämpfer werden in der Weise hergestellt, daß zunächst zwei separate Formteile aus Gummi gespritzt werden, die dann in einem zweiten Arbeitsgang flächig miteinander verbunden werden. Ein solches Verfahren ist für die Massenfertigung von Gummifederelementen zur Verwendung beispielsweise in der Autoindustrie, völlig ungeeignet.

Dieses Problem wird gemäß der Erfindung dadurch gelöst, daß der mit den Hohlräumen und Hohlkanälen durchsetzte Gummifederblock durch Formpressen oder Spritzgießen einer noch unvernetzten Gummimischung in einem mit Formkernen durchsetzten Formnest eines Spritzgießformwerkzeugs hergestellt wird, wobei zur Darstellung der Schnittpunkte der Hohlkanäle vorzugsweise mit wiederverwendbaren gestoßenen Stahlformkernen gearbeitet wird. Diese Stahlformkerne sind auch bei der Herstellung großvolumiger Gummifederelemente problemlos ziehbar, und zwar speziell auch dann, wenn sie blockweise gemeinsam gezogen werden.

Nach dem Entformen wird unmittelbar das einsatzfertige Gummifederelement erhalten.

Die Erfindung ist im folgenden anhand von Ausführungsbeispielen in Verbindung mit der Zeichnung näher erläutert. Es zeigen:
- Fig. 1: im Schnitt und in Draufsicht ein Federelement gemäß der Erfindung;
- Fig. 2: einen Schnitt nach II-II in Fig. 1; und
- Fig. 3: ein weiteres Ausführungsbeispiel des Gummifederelements mit radialer Verteilung der Hohlkanäle und der Hohlräume.

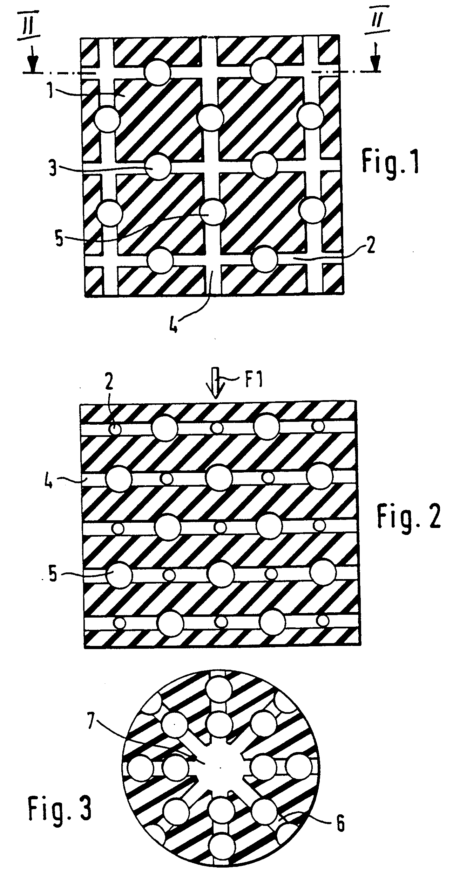

In der Fig. 1 ist im horizontalen Querschnitt und in senkrechter Draufsicht auf diesen Schnitt ein erstes Ausführungsbeispiel des Gummifederelements gemäß der Erfindung dargestellt, bei dem zwei Scharen untereinander paralleler Hohlkanäle sich orthogonal in ein und derselben Ebene im Raum schneiden.

Im einzelnen ist der die Gummimatrix 1 bildende Gummiblock mit einer ersten Schar von untereinander parallelen Hohlkanälen 2 durchsetzt, die ihrerseits symmetrisch und orthogonal angeordnete kugelförmige Hohlräume 3 zentral symmetrisch durchsetzen.

Orthogonal zu der Schar dieses Hohlkanäle 2 ist eine zweite Schar von Hohlkanälen 4 in der Gummimatrix 1 ausgebildet, die ebenfalls in regelmäßigen Abständen angeordnete Hohlräume 5 ebenfalls zentrosymmetrisch durchsetzt. Dabei kann das durch die regelmäßige Verteilung der Hohlräume 5 gebildete Gitter als Zwischengitter oder Untergitter des kubischen Gitters der Hohlräume 3 angesehen werden. Entscheidend ist dabei jedoch nicht primär die Symmetrie der einzelnen Gitter oder ihre gegenseitige Zuordnung, sondern vielmehr, daß insgesamt eine regelmäßige Verteilung der Hohlräume und der Kanäle in der Gummimatrix gewährleistet ist.

In der Fig. 2 ist zusätzlich der Lastvektor, genauer der Auflastvektor F1 dargestellt, der in der gezeigten Aufrichtung vorzugsweise senkrecht zu den beschichteten Kanalscharebenen steht, also senkrecht zu der in Fig. 1 gezeigten Schnittebene.

In der in Fig. 3 gezeigten Weise sind die einzelnen Kanäle 6 in einem zylindrischen Block als Gummimatrix, die in der Fig. 3 in Draufsicht auf einen Querschnitt dargestellt ist, so angeordnet, daß sie, beidseitig offen, gemeinsam in eine von einer Stirnseite zur anderen durchgehenden beidseitig offenen Zentralbohrung 7 einmünden. Die Mittelachse der Zentralbohrung 7 ist gleichsam der geometrische Ort der Schnittpunkte der radial angeordneten Hohlkanäle 6. Das in der Fig. 3 gezeigte Gummifederelement ist für eine abzufedernde Auflast ausgelegt, deren Auflastvektor parallel zur Mittelachse der Zentralbohrung 7 steht.

## Patentansprüche

1. Gummifederelement aus einem mit Hohlkanälen (2,4,6) und Hohlräumnen (3,5) derart durchsetzten Gummimatrix (1), dass jeder der in der Gummimatrix ausgebildeten Hohlräume (3,5) von mindestens einem der Hohlkanäle (2,4,6) durchsetzt ist, wobei die Hohlkanäle (2,4,6) mindestens einseitig offen sind,
dadurch **gekennzeichnet,**
dass der Flächeninhalt des lichten Querschnitts der Hohlkanäle (2,4,6) bei gleicher Ausrichtung der Schnittebenen senkrecht zur Längsrichtung der Hohlkanäle (2,4,6) jeweils mindestens 25% des Flächeninhalts des grössten lichten Querschnitts des nächstliegenden, von diesem Hohlkanal (2,4,6) durchsetzten Hohlraums (3,5) beträgt, und dass sich die Hohlkanäle (2,4,6) in der Gummimatrix (1) kommunizierend entweder unmittelbar oder in den Hohlräumen (3,5) schneiden.

2. Gummifederelement nach Anspruch 1,
dadurch **gekennzeichnet,**
dass sich die Hohlkanäle (2,4,6) ausserhalb der Hohlräume (3,5) unmittelbar schneiden, wenn drei nicht in einer Ebene liegende Hohlkanäle (2,4) in einem Schnittpunkt zusammentreffen.

3. Gummifederelement nach Anspruch 1,
dadurch **gekennzeichnet,**
dass der Schnittpunkt der Hohlkanäle innerhalb eines Hohlraumes liegt, und zwar insbesondere dann, wenn in einem solchen Schnittpunkt in einer Ebene mehr als zwei Hohlkanäle zusammentreffen.

4. Gummifederelement nach einem der Ansprüche 1 bis 3,
dadurch **gekennzeichnet,**
dass die Hohlräume (3,5) Kugelgestalt haben und dass die Hohlkanäle (2,4,6) kreiszylindrisch konfiguriert sind.

5. Gummifederelement nach einem der Ansprüche 1, 3 oder 4,
dadurch **gekennzeichnet,**
dass die Hohlkanäle in Ebenen angeordnet sind, die senkrecht zum Lastvektor einer bestimmungsgemäss von dem Federelement aufzunehmenden Last ausgerichtet sind.

6. Gummifederelement nach Anspruch 5,
**gekennzeichnet** durch
mindestens zwei solcher dergestalt in Richtung des Auflastvektors ohne einander zu schneiden oder zu berühren übereinanderliegenden Ebenen von Hohlräumen und Hohlkanälen, dass die Hohlkanalschnittpunkte von Ebene zu Ebene auf Lücke gegeneinander versetzt angeordnet sind.

7. Gummifederelement nach einem der Ansprüche 5 oder 6,
dadurch **gekennzeichnet,**
dass die in jeweils einer Ebene liegenden Hohlkanäle ein orthogonales oder hexagonales Flächengitter bilden.

8. Gummifederelement nach einem der Ansprüche 5 oder 6,
dadurch **gekennzeichnet,**
dass die Hohlkanäle (6) einer Ebene in einer scheibenförmigen Gummimatrix radial verlaufend und mit gleichem Winkelabstand voneinander angeordnet sind und sich in einem zentralen Hohlraum (7) schneiden.

9. Gummifederelement nach einem der Ansprüche 1 bis 4,
dadurch **gekennzeichnet,**
dass die Hohlkanäle (2,4) und die Hohlräume (3,5) räumlich gleichmässig in der Gummimatrix (1) verteilt angeordnet sind und insbesondere untereinander ein kubisches, hexagonales oder tetragonales Raumgitternetz bilden.

10. Verfahren zur Herstellung des Gummifederelementes nach einem der Ansprüche 1 bis 9 durch Formpressen oder Spritzgiessen einer Gummimischung in einem mit Formkernen durchsetzten Formnest eines Formwerkzeuges, wobei wiederverwendbare gestossene Formkerne verwendet werden, die aus den mindestens einseitig offenen Hohlkanälen (2,4,6) herausgezogen werden.

## Claims

1. A rubber spring element consisting of a rubber matrix traversed by hollow channels (2,4,6) and cavities (3,5) in such a manner that each of the cavities (3,5) formed in the rubber matrix is traversed by at least one of the hollow channels (2,4,6), wherein the hollow channels (2,4,6) are at least one-sided open,
**characterised** in that
the area of the inside cross-section of the hollow channels (2,4,6), given the same alignment of the secant planes at right angles to the longitudinal direction of the hollow channels (2,4,6), amounts in each case to at least 25 % of the area of the largest inside cross-section of the nearest cavity (3,6) traversed by this hollow channel (2,4,6) and that the hollow channels (2,4,6) in the rubber matrix (1) intersect communicatingly either directly or in the cavities.

2. A rubber spring element as claimed in claim 1,
**characterised** in that
the hollow channels (2,4,6) intersect directly outside the cavities, if three hollow channels (2,4) not lying in one plane meet at one point of intersection.

3. A rubber spring element as claimed in claim 1,
**characterised** in that
the point of intersection of the hollow channels lies inside of one cavity, particularly if more than two hollow channels meet at such an intersection point in one plane.

4. A rubber spring element as claimed in one of the claims 1 to 3,
**characterised** in that
the cavities (3,5) have a spherical shape and that the hollow channels (2,4,6) are circular cylindrically configurated.

5. A rubber spring element as claimed in one of the claims 1, 3 or 4,
**characterised** in that
the hollow channels are disposed in planes aligned perpendicular to the load vector of a load which is intended to be supported by the spring element.

6. A rubber spring element as claimed in claim 5,
**characterised** by
at least two such planes of cavities and hollow channels, which planes lie one above the other without intersecting or touching one another in such a manner that the points of intersection of the hollow channels are mutually staggered from plane to plane.

7. A rubber spring element as claimed in one of the claims 5 or 6,
**characterised** in that
the hollow channels respectively lying in one plane form an orthogonal or hexagonal two-dimensional lattice.

8. A rubber spring element as claimed in one of the claims 5 or 6,
**characterised** in that
the hollow channels (6) of a plane are disposed so as to extend radially in a disc-shaped rubber matrix with equal angular spacing and intersect in a central cavity (7).

9. A rubber spring element as claimed in one of the claims 1 to 4,
**characterised** in that
the hollow channels (2,4) and the cavities (3,5) are uniformly distributed spatially in the rubber matrix (1) and especially form a cubic, hexagonal or tetragonal space lattice net work among each other.

10. A method of producing the rubber spring element as claimed in one of the claims 1 to 9 by compression molding or injection molding of a rubber mixture in a mold nest of a molding tool which is traversed by mold cores, wherein reusable pushed mold cores are used, which are pulled out of at least one-sided open hollow channels (2,4,6).

## Revendications

1. Ressort en caoutchouc fait d'une matrice en caoutchouc (1) traversée de canaux creux (2, 4, 6) et d'espaces vides (3, 5) de sorte que chacun des espaces vides (3, 5) conçus dans la matrice en caoutchouc est traversé par au moins l'un des canaux creux (2, 4, 6), les canaux creux (2, 4, 6) étant ouverts au moins d'un côté, caractérisé en ce que, pour le même alignement des plans de coupe, perpendiculairement au sens longitudinal des canaux creux (2, 4, 6), la superficie de la dimension intérieure des canaux creux (2, 4, 6) correspond à chaque fois au moins à 25% de la superficie de la plus grande dimension intérieure de l'espace vide (3, 5) le plus proche traversé par ce canal creux (2, 4, 6) et en ce que les canaux creux (2, 4, 6) se coupent dans la matrice en caoutchouc (1) en communiquant soit directement soit dans les espaces vides (3, 5).

2. Ressort en caoutchouc selon la revendication 1, caractérisé en ce que les canaux creux (2, 4, 6) se coupent directement en dehors des espaces vides (3, 5) lorsque trois canaux creux (2, 4) non situés sur un plan se rencontrent à un point d'intersection.

3. Ressort en caoutchouc selon la revendication 1, caractérisé en ce que le point d'intersection des canaux creux est situé à l'intérieur d'un espace vide, et, en particulier lorsque plus de deux canaux creux se rencontrent sur un plan, à un tel point d'intersection.

4. Ressort en caoutchouc selon l'une des revendications 1 à 3, caractérisé en ce que les espaces vides (3, 5) ont une forme sphérique et en ce que les canaux creux (2, 4, 6) ont une configuration cylindrique circulaire.

5. Ressort en caoutchouc selon l'une des revendications 1, 3 ou 4, caractérisé en ce que les canaux creux sont disposés sur des plans qui sont alignés perpendiculairement au vecteur de charge d'une charge devant être reçue, conformément à la définition, par le ressort.

6. Ressort en caoutchouc selon la revendication 5, caractérisé par au moins deux plans d'espaces vides et de canaux creux, plans superposés en direction du vecteur de charge sans se couper ni entrer en contact de sorte que les points d'intersection des canaux creux sont disposés de plan en plan sur un vide et décalés les uns par rapport aux autres.

7. Ressort en caoutchouc selon l'une des revendications 5 ou 6, caractérisé en ce que les canaux creux situés chacun sur un plan forment un réseau bidimensionnel orthogonal ou hexagonal.

8. Ressort en caoutchouc selon l'une des revendications 5 ou 6, caractérisé en ce que les canaux creux (6) d'un plan sont disposés de façon radiale dans une matrice en caoutchouc en forme de disque, avec le même espacement angulaire entre eux et en ce qu'ils se coupent dans un espace vide central (7).

9. Ressort en caoutchouc selon l'une des revendications 1 à 4, caractérisé en ce que les canaux creux (2, 4) et les espaces vides (3, 5) sont uniformément répartis dans l'espace dans la matrice en caoutchouc (1) et forment en particulier entre eux un réseau cubique, hexagonal ou tétragonal.

10. Procédé de fabrication du ressort en caoutchouc selon l'une des revendications 1 à 9, par moulage par compression ou par injection d'un mélange de caoutchouc dans une empreinte de moule d'un outil de formage contenant des noyaux, des noyaux pilés réutilisables qui sont extraits des canaux creux (2, 4, 6) ouverts au moins d'un côté étant utilisés.
